# EUROPÄISCHE PATENTANMELDUNG

(11) **EP 1 886 975 A1**
(43) Veröffentlichungstag der Anmeldung: **13.02.2008**
(21) Anmeldenummer: 07015516.3
(22) Anmeldetag: 07.08.2007
(51) Int. Cl.: C02F 1/66, F24H 8/00

(54) **Neutralisator**

(30) Priorität: 10.08.2006 DE 102006037502; 30.10.2006 DE 102006051190
(71) Anmelder: Mommertz Wasser- und Wärmetechnik GmbH, 89312 Günzburg (DE)
(72) Erfinder: Mommertz, Peter, 89312 Günzburg (DE)
(74) Vertreter: Dey, Michael

(57) **Zusammenfassung**

Die Erfindung betrifft eine Vorrichtung zur Neutralisation von Rauchgasoder/und Abgas-Kondensaten, wobei das Neutralisierungsmittel regeneriert wird.

## Beschreibung

Die Erfindung betrifft eine Vorrichtung zur Neutralisation von Rauchgasoder/und Abgas-Kondensaten, wobei das Neutralisierungsmittel regeneriert wird.

Aufgrund der immer weiter steigenden Energiepreise und auch aus ökologischen Erwägungen kommen immer effizientere Heizsysteme zur Anwendung um Brennstoffe einzusparen. Eine heute verbreitete Optimierung des Wirkungsgrades von Heizkesseln konnte durch die Nutzung der Kondensationswärme des Abgases, d.h. über eine Nutzung des Brennwertes erhalten werden. Bei diesen Brennwertkesseln wird die im Abgas vorhandene Restwärme noch genutzt, indem das Abgas bis unter den Taupunkt abgekühlt wird. Die dabei freiwerdende Kondensationswärme (latente Wärme) ergibt, zusammen mit der noch gewonnenen fühlbaren Wärme, eine Wirkungsgradsteigung von 20 bis 30 % gegenüber dem konventionellen Betrieb. Durch nachgeschaltetete Wärmeaustauscher wird der Rauch oder das Abgas in den Feuerstätten selbst oder nachgeschaltet' im Schornstein abgekühlt.

Der zu erwartende Kondensatanfall hängt dabei vom Umfang der Kondensation ab. Bei vollständiger Kondensation fallen etwa 1,0 kg Kondensat/kg Heizöl bzw. 1,4 kg Kondensat/m³ Erdgas an. Bezogen auf die Heizleistung liegt der zu erwartende maximale Kondensatanfall bei etwa 0,08 kg Kondensat pro kW/h Heizleistung für ÖI-Brennwertkessel und bei etwa 0,12 kg Kondensat pro kW/h Heizleistung für Gas-Brennwertkessel. In der Praxis liegen diese Werte infolge von nur parzieller Kondensation um etwa 50 % niedriger. Die Menge des anfallenden Kondensats ist somit nicht unerheblich.

Sie beträgt zum Beispiel bei einem Heizölverbrauch von 4000 Liter pro Heizperiode etwa 2000 bis 2500 Liter. Das anfallende Kondensat ist mit wasserlöslichen Bestandteilen des Rauchs bzw. der Abgase angereichert. Hierbei handelt es sich hauptsächlich um Schwefeloxide (SOₓ) und Stickstoffoxide (NOₓ), die zu einer Senkung des pH-Wertes des Kondensats beitragen. Außerdem enthält das Kondensat gelöste Kohlenwasserstoffe, Teer und Ruß. Die Kondensation hat somit den Effekt, dass ein großer Teil der umweltbelastenden Stoffe aus dem Rauch oder Abgas entfernt wird.

Neuerdings werden in Brennwertkessel auch Biomassebrennstoffe wie z.B. Holz, Getreide, Stroh etc. in Form von Pellets als Alternative zu Gas oder Öl eingesetzt, deren Kondensatanfall abhängig von der Kesselleistung auf jeden Fall vergleichbar ist. Des Weiteren fällt bei Niedertemperaturkesseln Kondensat an, jedoch in kleineren Mengen, das ebenfalls wie bei einem Brennwertkessel neutralisiert werden muss.

Problematisch ist allerdings, dass das anfallende Kondensat stark sauer ist und somit nicht unmittelbar in die Umwelt oder Abwasserkanäle eingeleitet werden kann. Die pH-Werte von anfallendem Kondensat betragen beispielsweise beim Einsatz von Heizöl EL etwa pH 2 und bei Erdgas etwa pH 3 bis 4. Diese stark sauren wässrigen Lösungen können aber nicht unmittelbar in die Kanalisation geleitet werden, da für das Einleiten von Wasser in öffentliche Abwasseranlagen ein pH-Wert von 6,5 oder größer vorgeschrieben ist. Ein pH-Wert von 6,5 oder größer ist erforderlich, damit keine Werkstoffkorrosion der Entwässerungssysteme, insbesondere eine Zersetzung des Betons von Kanalrohren erfolgt, und damit biologische Stufen von Kläranlagen nicht geschädigt werden. Zur Ableitung in öffentliche Abwassersysteme müssen die gebildeten Kondensate deshalb neutralisiert werden.

Eine Neutralisation von Kondensaten durch Vermischen mit Frischwasser, insbesondere mit Trinkwasser, ist zu teuer, da beispielsweise für eine vollständige Neutralisation durch die Carbonathärte bei Wasser mit einer Carbonathärte von 10 ° dKH pro ein Liter Kondensat etwa 90 Liter Wasser nötig wären. Auch eine Neutralisation mit häuslichem Abwasser ist nicht ausreichend und dazu oftmals unzuverlässig.

Die Neutralisation muss deshalb zweckmäßigerweise mittels Neutralisierungsmaterialien erfolgen. Ein dabei auftretendes Problem, insbesondere bei der Verwendung von granulatförmigem Neutralisierungsmaterial war jedoch, dass das Neutralisierungsmaterial mit in den Kondensaten enthaltenen Stoffen belegt wird und nach einer gewissen Zeit die Neutralisationswirkung deutlich nachgelassen hat.

Eine Aufgabe der Erfindung war es nun, über einen längeren Zeitraum eine ausreichende Neutralisationswirkung bereitstellen zu können, und insbesondere eine Regeneration des Neutralisierungsmaterials mit einfachen Mitteln zu bewerkstelligen.

Diese Aufgabe wird erfindungsgemäß gelöst durch eine Vorrichtung zur Neutralisation von Rauchgas- oder/und Abgas-Kondensaten, umfassend einen Durchflussbehälter, in dem eine Schicht aus granulatförmigem Neutralisierungsmittel angeordnet ist, welche dadurch gekennzeichnet ist, dass zur Regeneration des Neutralisierungsmaterials Mittel zum Einbringen eines Fluids in den Durchflussbehälter vorgesehen sind.

Bei der Verwendung von Schwefel enthaltenden Brennstoffen bilden sich im Rauch oder Abgas Schwefeloxide. Im Kondensat lösen sich diese Schwefeloxide und führen über die Bildung von Schwefelsäure (H₂SO₄) zu einer deutlichen Senkung des pH-Wertes. Das im Kondensat enthaltene H₂SO₄ führt weiterhin dazu, dass im Kessel, Leitungen oder sonstigen apparativen Vorrichtungen, mit denen das Kondensat in Kontakt kommt, Metalle gelöst werden. So löst H₂SO₄ insbesondere Eisen aus eisenhaltigen Apparateteilen heraus, aber auch andere Schwermetalle. Die im sauren Kondensat im Zulauf zu einer Neutralisationsvorrichtung in gelöster Form enthaltenen Metalle fallen bei einer Neutralisation des Kondensats aus. Das im Basischen ausfallende Eisenoxid (oder anderes Metalloxid) bedeckt dabei das granulatförmige Neutralisationsmaterial. Durch die Belegung des Granulats wird die Neutralisation zunächst behindert und schließlich vollständig verhindert. Dies führt dazu, dass trotz Einsatz einer Neutralisationsvorrichtung keine effektive Neutralisierung des abgeleiteten Kondensats mehr stattfindet und dieses einen sehr niedrigen pH-Wert, beispielsweise kleiner 3, aufweist.

Es wurde nun festgestellt, dass eine Regeneration des Neutralisationsgranulats auf einfache Weise erhalten werden kann, indem das Neutralisationsmaterial und das Kondensat bewegt wird und auf diese Weise der Metalloxidbelag von den Granulatkörnchen entfernt bzw. abgeschüttelt wird. Durch die Bewegung der Granulatkörnchen bzw. durch das Aufmischen des Kondensats wird die die Körnchen umlagernde Metalloxidschicht abgelöst und ausgetragen. Auf diese Weise ist die neutralisierend wirkende Oberfläche des Neutralisationsmaterials für das Kondensat wiederum zugänglich, und es kann eine effektive Neutralisation des abgeleiteten Kondensats erfolgen.

Eine Bewegung des Neutralisationsgranulats kann beispielsweise durch Verwendung von Rührvorrichtungen, Schüttelvorrichtungen oder durch Vibrationen erfolgen. Während diese Vorgehensweisen grundsätzlich möglich und auch Gegenstand der vorliegenden Erfindung sind, sind sie oftmals technisch relativ aufwändig und erfordern insbesondere einigen apparativen Aufwand hinsichtlich der Bewegungsvorrichtungen sowie hinsichtlich der Befestigung des Neutralisationsbehälters, beispielsweise in Form von Vibrationsdämpfungen.

Es wurde nun festgestellt, dass durch Einbringen eines Fluids in die Schicht aus granulatförmigem Neutralisierungsmaterial eine effektive Ablösung von auf dem Neutralisationsgranulat abgeschiedenen Metalloxidschichten stattfindet. Das Ablösen wird durch die Strömung des Fluids bzw. durch eine durch das einströmende Fluid verursachte Bewegung des Neutralisationsgranulats bewirkt. Durch einfaches Einbringen eines Fluids werden die Granulatteilchen bewegt, wodurch die Umlagerung abgelöst und ausgetragen wird. Besonders bevorzugt handelt es sich bei dem eingebrachten Fluid um ein Gas, insbesondere um Luft, welches mittels einer einfachen Pumpe in die Schicht aus granulatförmigem Neutralisierungsmaterial eingeblasen werden kann. Es ist aber auch möglich, als Fluid eine Flüssigkeit, beispielsweise Wasser, einzusetzen.

In der besonders bevorzugten Ausführungsform, in der das Fluid als Gas in den Durchflussbehälter eingebracht und durch die Schicht aus granulatförmigem Neutralisationsmaterial geleitet wird, wird das Kondensat durch das eingebrachte Gas aufgemischt. Vorzugsweise wird das Gas dabei an der Unterseite der Neutralisierungsgranulatschicht eingebracht und steigt nach oben durch die Granulatschicht hindurch, wobei die aufsteigenden Gasblasen anhaftende Beläge, beispielsweise Eisenoxid- oder Metalloxidbeläge, ablösen.

Das Einblasen kann beispielsweise höchst einfach mittels einer Pumpe, beispielsweise einer Aquariumspumpe, über ein Schlauch- und Rohrsystem, welches Öffnungen zum Austritt des Gases aufweist, erfolgen.

Die erfindungsgemäße Vorrichtung zur Neutralisation umfasst einen Durchflussbehälter, welcher zur Durchleitung des Kondensats vorgesehen ist. Die Durchleitung erfolgt bevorzugt drucklos. Der Durchflussbehälter kann grundsätzlich in beliebiger Form gestaltet werden, beispielsweise als Rohr, Kiste oder Kanister. Der Durchflussbehälter weist weiterhin eine Zuflussund eine Ablassöffnung auf.

Als granulatförmiges Neutralisierungsmaterial kann erfindungsgemäß jedes Material eingesetzt werden, welches in der Lage ist, einen sauren Zufluss zu neutralisieren. Besonders bevorzugt handelt es sich bei dem granulatförmigen Neutralisierungsmaterial um Magnesiumoxid/Magnesiumhydroxid. Die Mischung liegt dabei zweckmäßig als Granulat vor, wobei jedes Granulatkorn MgO und Mg(OH)₂ enthalten kann. Alternativ können Granalien bestehend jeweils aus MgO bzw. Mg(OH)₂ miteinander gemischt werden. Es können aber auch Mischungen aus Magnesiumoxid, Magnesiumhydroxid, Carbonaten oder anderen zur Neutralisation verwendbare Mittel eingesetzt werden.

Es ist grundsätzlich aber auch möglich, andere granulatförmige Neutralisierungsmaterialien zu verwenden. Besonders bevorzugt werden poröse, wasserschwerlösliche Granulatmaterialien eingesetzt.

Die erfindungsgemäß eingesetzten granulatförmigen Neutralisierungsmaterialien weisen vorzugsweise eine Korngröße von 1 bis 10 mm, mehr bevorzugt 2,0 bis 5 mm auf. Die notwendige Schichthöhe und -menge des Materials hängen von der jeweiligen Durchflussmenge und vom pH-Wert des Kondensats ab. Der Durchströmungsweg der Neutralisationsschicht wird dabei so gewählt, dass die pH-Werte des abfließenden Kondensats bei pH-Werten über pH 6,5, insbesondere über pH 7,5 und bis pH 9, insbesondere bis pH 8,5 liegen. Eine Verweilzeit von etwa einer halben Stunde hat sich dabei oftmals als zweckmäßig erwiesen.

In Kondensaten sind oftmals organische Verunreinigungen, wie,etwa gelöste Kohlenwasserstoffe, Teer oder Ruß vorhanden. In einer bevorzugten Ausführungsform weist die erfindungsgemäße Vorrichtung deshalb zusätzlich zur Schicht aus Neutralisierungsmaterial eine Aktivkohleschicht auf. Diese Aktivkohleschicht dient dazu, im Kondensat befindliche Kohlenwasserstoffe zu absorbieren. Dadurch wird zum einen das Kondensat gereinigt, zum anderen wird die Oberfläche des Neutralisationsgranulats nicht belegt und bleibt für die pH-Wert-Neutralisation aktiv. Die Aktivkohleschicht ist zweckmäßigerweise in Durchflussrichtung vor der Neutralisationsschicht angeordnet.

Mit der erfindungsgemäßen Vorrichtung können insbesondere Rauchgasund/oder Abgas-Kondensate von Brennwertsystemen gereinigt werden. Die Vorrichtung ist besonders vorteilhaft für Brennwertsysteme, die mit Erdgas oder Öl befeuert werden. Die Erfindung kommt insbesondere dann zum Tragen, wenn der Brennstoff einen hohen Gehalt an Schwefel aufweist, beispielsweise größer gleich 0,1 Gew.-% Schwefel, insgesamt größer gleich 2 Gew.-% Schwefel, bezogen auf das Gesamtgewicht des Brennstoffs.

Ein weiterer Gegenstand der vorliegenden Erfindung ist ein Durchflussbehälter zur Neutralisation von Rauchgas- oder/und Abgas-Kondensaten, umfassend einen Zulauf und einen Ablauf, wobei der Behälter zur Aufnahme von Neutralisationsmaterial eingerichtet ist, wobei der Behälter weiterhin mit Mitteln zur Bewegung des Neutralisierungsmaterials und insbesondere mit Mitteln zum Einbringen eines Fluids versehen ist.

Die Erfindung betrifft weiterhin ein Verfahren zur Neutralisation an Rauchgas- oder/und Abgas-Kondensaten, umfassend die Schritte (i) Bilden eines Rauchgas- oder/und Abgas-Kondensats durch Abkühlen von Rauchgas bzw. Abgas, (ii) Leiten des Kondensats über eine Schicht aus granulatförmigem Neutralisationsmaterial und (iii) Ableiten eines neutralisierten Kondensats, welches dadurch gekennzeichnet ist, dass das Neutralisierungsmaterial regeneriert wird.

In der Praxis hat sich oftmals gezeigt, dass insbesondere bei hohem Schwefelanteil im Brennstoff eine Bedeckung des Neutralisierungsgranulats und damit eine ineffektivere Neutralisation nach einigen Wochen oder Monaten eintritt. Durch Abklopfen bzw. Bewegen der Granulatkörner kann, wie oben ausgeführt, das Neutralisierungsgranulat auf einfache Weise regeneriert werden. Die Bewegung kann dabei kontinuierlich erfolgen. Dabei wird, beispielsweise immer wenn die Heizanlage in Betrieb ist, ein Fluid durch die Neutralisierungsschicht geleitet. Auf diese Weise wird das Neutralisierungsgranulat stetig regeneriert. Weiterhin können Schwermetalle im Abwasser entfernt werden.

Es ist aber auch möglich eine Regenerierung stoßweise durchzuführen, beispielsweise in vorbestimmten Zeitintervallen. Eine solche stoßweise Regenerierung kann beispielsweise täglich oder wöchentlich für eine vorbestimmte Zeit, beispielsweise 30 Minuten, erfolgen.

Die Einblasvorrichtung kann beliebige Geometrien haben. Hier ist es insbesondere wichtig, dass die Zufuhrvorrichtung so ausgestaltet ist, dass das Fluid aus der Zufuhrvorrichtung durch die Granulatschicht dringen kann. Geeignet sind beispielsweise Leitungen mit Löchern, aus denen das Fluid austreten und durch die Neutralisationsschicht treten kann.

In einer weiteren besonders bevorzugten Ausführungsform wird ein Teil, beispielsweise größer gleich 10 Gew.-%, mehr bevorzugt größer gleich 50 Gew.-% oder das gesamte granulatförmige Neutralisierungsmaterial mit einem algenbildungsverhindernden Mittel (Antialgen-Mittel) versetzt. Dadurch kann eine weitere Belegung oder Verstopfung des Systems ausgeschieden werden. Besonders bevorzugt wird ein Antialgen-Mittel eingesetzt, welches nicht toxisch ist, um keine weitere Belastung des Abwassers zu ergeben.

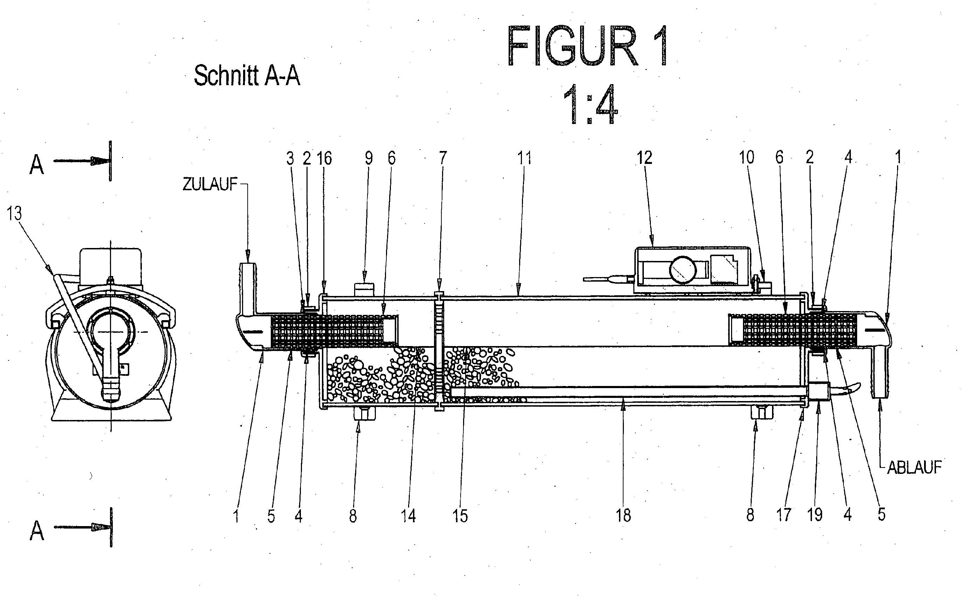

Figur 1 zeigt eine bevorzugte Ausführungsform einer erfindungsgemäßen Vorrichtung. Die Referenzzeichen sind wie folgt zugeordnet:
1) Winkeltülle 0 40/20, (2) Überwurfmutter, (3) Gleitring, (4) Konische Dichtung (blau), (5) O-Ring 31,00 x 2,5, (6) Rohrsieb, (7) Trennscheibe mit Schlitz, (8) Steilfüße/Halterungen, (9) Bügel, (10) Bügel mit Bohrung, (11) Filtergehäuse, (12) Booster, (13) Luftschlauch, (14) Aktivkohle, (15) Granulat, (16) Anschlußgewinde, (17) Anschlußgewinde mit Bohrung, (18) Rohr/Luftverteiler, (19) Rückschlagventil.

## Patentansprüche

1. Vorrichtung zur Neutralisation von Rauchgas- oder/und Abgas-Kondensaten umfassend einen Durchflussbehälter, in dem eine Schicht aus granulatförmigem Neutralisierungsmittel angeordnet ist,
**dadurch gekennzeichnet,**
**dass** zur Regeneration des Neutralisierungsmaterials Mittel zum Einbringen eines Fluids in den Durchflussbehälter vorgesehen sind.

2. Vorrichtung nach Anspruch 1,
**dadurch gekennzeichnet,**
**dass** das Neutralisierungsmaterial Magensiumoxid/Magnesiumhydroxid umfasst.

3. Vorrichtung nach Anspruch 1 oder 2,
**dadurch gekennzeichnet,**
**dass** das Granulat eine Korngröße von 1 bis 10 mm aufweist.

4. Vorrichtung nach einem der vorhergehenden Ansprüche,
**dadurch gekennzeichnet,**
**dass** in dem Durchflussbehälter zusätzlich zur Schicht aus granulatförmigem Neutralisierungsmaterial eine Aktivkohleschicht angeordnet ist, welche der Schicht aus granulatförmigem Neutralisierungsmaterial hinsichtlich der vorgesehenen Strömungsrichtung insbesondere vorgeschaltet ist.

5. Vorrichtung nach einem der vorhergehenden Ansprüche,
**dadurch gekennzeichnet,**
**dass** die Mittel zum Einbringen des Fluids eine Pumpe zur Beförderung von Gasen oder eine Pumpe zur Beförderung von Flüssigkeiten umfassen.

6. Vorrichtung nach einem der vorhergehenden Ansprüche,
**dadurch gekennzeichnet,**
**dass** es sich bei dem Fluid um Luft handelt.

7. Vorrichtung nach einem der vorhergehenden Ansprüche,
**dadurch gekennzeichnet,**
**dass** die Schicht aus granulatförmigem Neutralisierungsmittel und gegebenenfalls eine Aktivkohleschicht in Form einer Nachfüllpackung vorliegt.

8. Vorrichtung zur Neutralisation von Rauchgas- oder/und Abgas-Kondensaten, umfassend einen Durchflussbehälter, in dem eine Schicht aus granulatförmigem Neutralisierungsmaterial angeordnet ist,
**dadurch gekennzeichnet,**
**dass** zur Regeneration des Neutralisierungsmaterials Mittel zum Bewegen oder Durchströmen des Granulats in dem Durchflussbehälter vorgesehen sind.

9. Vorrichtung nach Anspruch 8,
**dadurch gekennzeichnet,**
**dass** die Mittel zum Bewegen einen Rührer oder/und eine Schüttelvorrichtung umfassen.

10. Vorrichtung nach einem der vorhergehenden Ansprüche,
**dadurch gekennzeichnet,**
**dass** wenigstens ein Teil des Neutralisierungsmittels mit einem algenbildungshemmenden Mittel versehen ist.

11. Durchflussbehälter zur Neutralisation von Rauchgas- oder/und Abgas-Kondensaten, umfassend einen Zulauf und einen Ablauf, wobei der Behälter zur Aufnahme eines Neutralisationsmaterials eingerichtet ist, wobei der Behälter weiterhin mit Mitteln zum Einbringen eines Fluids versehen ist.

12. Durchflussbehälter nach Anspruch 11,
**dadurch gekennzeichnet,**
**dass** der Behälter weiterhin zur Aufnahme einer Aktivkohleschicht eingerichtet ist.

13. Durchflussbehälter zur Neutralisation von Rauchgas- oder/und Abgas-Kondensaten, umfassend einen Zulauf und einen Ablauf, wobei der Behälter zur Aufnahme eines Neutralisationsmaterials eingerichtet ist, wobei der Behälter mit Mitteln zur Bewegung des Neutralisierungsmaterials versehen ist.

14. Durchflussbehälter nach Anspruch 13,
**dadurch gekennzeichnet,**
**dass** die Mittel zur Bewegung des Neutralisationsmaterials Rührvorrichtungen oder/und Schüttelvorrichtungen umfassen.

15. Verfahren zur Neutralisation von Rauchgas- oder/und Abgas-Kondensaten, umfassend die Schritte
(i) Bilden eines Rauchgas- oder/und Abgas-Kondensats durch Abkühlen von Rauchgas bzw. Abgas,
(ii) Leiten des Kondensats über eine Schicht aus granulatförmigem Neutralisationsmaterial und
(iii) Ableiten eines neutralisierten Kondensats,
**dadurch gekennzeichnet,**
**dass** das Neutralisierungsmaterial regeneriert wird.

16. Verfahren nach Anspruch 15,
**dadurch gekennzeichnet,**
**dass** die Regenerierung durch Schütteln oder Rühren des Neutralisierungsmaterials durchgeführt wird.

17. Verfahren nach Anspruch 15 oder 16,
**dadurch gekennzeichnet,**
**dass** die Regeneration des Neutralisierungsmaterials durch Einbringen eines Fluids in das Neutralisierungsmaterial erfolgt.

18. Verfahren nach einem der Ansprüche 15 bis 17,
**dadurch gekennzeichnet,**
**dass** die Regeneration des Neutralisierungsmaterials durch Einbringen von Luft in das Neutralisierungsmaterial erfolgt.

19. Verfahren nach einem der Ansprüche 15 bis 17,
**dadurch gekennzeichnet,**
**dass** die Regeneration des Neutralisierungsmaterials kontinuierlich durchgeführt wird.

20. Verfahren nach einem der Ansprüche 15 bis 18,
**dadurch gekennzeichnet,**
**dass** die Regeneration des Neutralisierungsmaterials pulsweise durchgeführt wird.
